# EUROPEAN PATENT APPLICATION

(11) **EP 3 410 829 A1**
(43) Date of publication of application: **05.12.2018**
(21) Application number: 17744208.4
(22) Date of filing: 24.01.2017
(51) Int. Cl.: H05B 37/02

(54) **LIGHTING CONTROL METHOD**

(30) Priority: 29.01.2016 JP 2016015555
(71) Applicant: Mass Co., Ltd., Osaka-shi, Osaka 540-0026 (JP); Kamada, Takeshi, Osaka-shi, Osaka 540-0012 (JP)
(72) Inventor: KAMADA, Takeshi, Osaka-shi Osaka 540-0012 (JP)
(74) Representative: Zimmermann, Tankred Klaus
(86) International application number: PCT/JP2017/002379
(87) International publication number: WO 2017/130978

(57) **Abstract**

The objective is to provide a technique that facilitates deciding on the lighting conditions of a lighting device illuminating an exhibit. A lighting device (A-1) illuminates a mannequin exhibited in a show window. A portable communication terminal (20A) captures an image of the mannequin and displays the captured image (28) of the mannequin. The portable communication terminal (20A) receives designation of a desired position on the mannequin in the displayed captured image (28) and acquires a color codeword that identifies the color in the captured image (28) for the designated desired position. A server (40) refers to a lighting condition database (61) storing a plurality of lighting conditions associated with a plurality of colors to determine the lighting condition associated with the color codeword acquired by the portable communication terminal (20A). The server (40) transmits the determined lighting condition to the lighting device (A-1) to cause the lighting device (A-1) to illuminate the mannequin under the determined lighting condition.

## Description

### TECHNICAL FIELD

The present invention relates to a lighting control method and, more particularly, to a lighting control method for controlling a lighting device for illuminating an exhibit.

### BACKGROUND ART

Light-emitting diode (LED) lighting devices allow their lighting conditions to be easily changed, unlike lighting devices using fluorescent lights. In an LED lighting device including, for example, a red LED, a green LED and a blue LED, the output of each of these LEDs may be controlled to change the color of the light from the LED lighting device to different colors.

Conventionally, lighting inside a store may be adjusted depending on the product being offered and the content of service. When the lighting conditions of a lighting device illuminating an exhibit such as a product are to be decided on, a staff member decides on the appropriate lighting conditions for illuminating the exhibit. During this, the staff member needs to try various lighting conditions, and the work for deciding on the lighting conditions represents a burden on the staff.

JP Hei7(1995)-240281 A discloses a technique used in a restaurant, where the lighting for a table at which a customer sits may be changed depending on the item the menu that has been ordered. According to the invention of JP Hei7(1995)-240281 A, a staff member operates a hand-held terminal, which receives the number of the table and the menu code for the ordered meal. A relay reads, from a menu file, the dimming data associated with the menu code received by the hand-held terminal. A lighting device placed on the table having the table number received by the hand-held terminal adjusts its output based on the dimming data that has been read. If a plurality of items have been ordered, dimming data is selected based on the order of priority that has been pre-set for the items on the menu.

According to the invention of JP Hei7(1995)-240281 A, any of the meals on the menu may be ordered by a customer, which makes it necessary to set the lighting conditions associated with all the meals on the menu in advance. However, in some circumstances, it may not be appropriate to decide on the lighting conditions for exhibits in advance. For example, in a clothing store, it is not usual to exhibit all the products being sold and illuminate them, making it inefficient to decide on the lighting conditions for all the products in advance.

Furthermore, when, in a clothing store, a mannequin wearing a plurality of articles of clothing are to be illuminated, the appropriate lighting conditions for the mannequin are decided on depending on the coordination for the articles of clothing. If the order of priority of the products is set in advance and the lighting conditions are decided on in accordance with the set order of priority, as in the invention of JP Hei7(1995)-240281 A, the lighting conditions that have been decided on are not necessarily appropriate for illuminating the mannequin.

Thus, a technique is desired for deciding on the lighting conditions easily even when the lighting conditions of a lighting device illuminating an exhibit are decided on afterward.

### SUMMARY OF THE INVENTION

### PROBLEMS TO BE SOLVED BY THE INVENTION

An object of the present invention is to provide a lighting control method that facilitates deciding on the lighting conditions of a lighting device illuminating an exhibit.

### MEANS FOR SOLVING THE PROBLEMS

A lighting control method according to the present disclosure controls a lighting device for illuminating an exhibit being exhibited in an exhibition space. The lighting control method according to the present invention includes the steps of: capturing an image of the exhibit and displaying the captured image of the exhibit; receiving designation of a desired position on the exhibit in the displayed captured image; referring to a lighting condition database storing a plurality of lighting conditions associated with a plurality of colors and determining a lighting condition associated with a first color in the captured image for the designated desired position; and causing the lighting device to illuminate the exhibit based on the lighting condition that has been determined.

According to the present disclosure, a position of the first color may be designated in a captured image of an exhibit, thereby enabling the lighting device to illuminate the exhibit under the lighting conditions suitable for the first color. This will facilitate deciding on the lighting conditions of the lighting device illuminating the exhibit.

Preferably, the lighting control method according to the present disclosure further includes the steps of: receiving designation of a desired position different from the desired position; referring to an adjustment condition database storing a plurality of adjustment conditions associated with a plurality of colors and determining an adjustment condition associated with a second color in the captured image for the designated different desired position; and adjusting the lighting condition that has been determined based on the adjustment condition that has been determined.

The lighting conditions suitable for both the first and second colors may be easily decided on.

Preferably, the lighting control method according to the present disclosure further includes the step of, while illuminating the exhibit with light associated with the lighting condition that has been determined, using in the exhibition space a portable communication terminal capable of communicating with the lighting device to fine-tune the light from the lighting device.

One may fine-tune the lighting conditions while checking the exhibit being illuminated by the lighting device, and thus may cause the lighting device to illuminate the exhibit under the lighting conditions suitable for the situation in the exhibition space.

Preferably, the lighting control method according to the present disclosure further includes the step of selecting one of a plurality of lighting devices. The step of illuminating causes the selected lighting device to illuminate the exhibit.

This facilitates selecting a lighting device for which the lighting conditions are to be decided on.

Preferably, the lighting control method according to the present disclosure further includes the steps of: receiving selection of a time suitable for an impression of the exhibit; referring to an adjustment condition database storing a plurality of adjustment conditions associated with a plurality of times and determining an adjustment condition associated with the selected time; and adjusting the lighting condition that has been determined based on the adjustment condition that has been determined.

The lighting device may be caused to illuminate the exhibit under the lighting conditions suitable for the time in which the exhibit is exhibited.

Preferably, the lighting control method according to the present disclosure further includes the step of notifying a plurality of lighting devices installed in a plurality of stores of the lighting condition that has been determined.

The lighting conditions that have been determined may be used as the lighting conditions for other lighting devices, thereby facilitating setting the lighting conditions of a plurality of lighting devices.

A lighting control system according to the present disclosure includes: a lighting device; a portable communication terminal; and a server. The lighting device illuminates an exhibit being exhibited in an exhibition space. The portable communication terminal is capable of communicating with the lighting device. The server is capable of communicating with the lighting device and the portable communication terminal. The portable communication terminal includes a camera, a display, and a position designation unit. The camera captures an image of the exhibit. The display displays the captured image of the exhibit captured by the camera. The position designation unit receives designation of a desired position on the exhibit in the captured image being displayed. The server includes a lighting-condition determination unit and a communication unit. The lighting-condition determination unit refers to a lighting condition database storing a plurality of lighting conditions associated with a plurality of colors and determines a lighting condition associated with a color in the captured image for the designated desired position. The communication unit transmits, to the lighting device, the lighting condition determined by the lighting-condition determination unit. The lighting device includes a light source and a control unit. The control unit controls the light source to emit light under the lighting condition transmitted by the communication unit.

The lighting control system according to the present disclosure may use the lighting control method according to the present disclosure to control the lighting device(s).

### EFFECTS OF THE INVENTION

The present disclosure facilitates deciding on the lighting conditions of a lighting device illuminating an exhibit.

### BRIEF DESCRIPTION OF THE DRAWINGS

[FIG. 1] FIG. 1 is a functional block diagram showing the configuration of a lighting control system according to an embodiment of the present disclosure.
[FIG. 2] FIG. 2 is a functional block diagram showing the configuration of a portable communication terminal shown in FIG. 1.
[FIG. 3] FIG. 3 is a functional block diagram showing the configuration of the server shown in FIG. 1.
[FIG. 4] FIG. 4 is a functional block diagram showing the configuration of a lighting device shown in FIG. 1.
[FIG. 5] FIG. 5 is a sequence diagram illustrating the operation of the lighting control system shown in FIG. 1.
[FIG. 6] FIG. 6 is the flow chart of the color acquisition process shown in FIG. 5.
[FIG. 7] FIG. 7 shows an example of the lighting device database shown in FIG. 3.
[FIG. 8] FIG. 8 shows an example of a device selection screen displayed on the touch panel shown in FIG. 2.
[FIG. 9] FIG. 9 shows an example of a captured image displayed on the touch panel shown in FIG. 2.
[FIG. 10] FIG. 10 shows an example of a main-color designation screen displayed on the touch panel shown in FIG. 2.
[FIG. 11] FIG. 11 shows an example of the color identification database shown in FIG. 2.
[FIG. 12] FIG. 12 shows an example of a subordinate-color designation screen displayed on the touch panel shown in FIG. 2.
[FIG. 13] FIG. 13 shows an example of a season selection screen displayed on the touch panel shown in FIG. 2.
[FIG. 14] FIG. 14 shows an example of the lighting control database shown in FIG. 3.
[FIG. 15] FIG. 15 is the flow chart of the lighting-condition determination process illustrated in FIG. 5.
[FIG. 16] FIG. 16 shows an example of a confirmation screen displayed on the touch panel shown in FIG. 2.
[FIG. 17] FIG. 17 shows an example of a fine-tuning value input screen displayed on the touch panel shown in FIG. 2.
[FIG. 18] FIG. 18 shows an example of data contained in the notification of completion of command issuance illustrated in FIG. 5.
[FIG. 19] FIG. 19 is a sequence diagram illustrating the operation of the lighting control system performed when several lighting devices shown in FIG. 1 are to be commanded at once to change their lighting conditions.

### EMBODIMENTS FOR CARRYING OUT THE INVENTION

An embodiment of the present invention will now be described in detail with reference to the drawings. The same or corresponding components in the drawings are labeled with the same characters, and their description will not be repeated.

### {1. Configuration of Lighting Control System}

### {1.1 Overall Configuration}

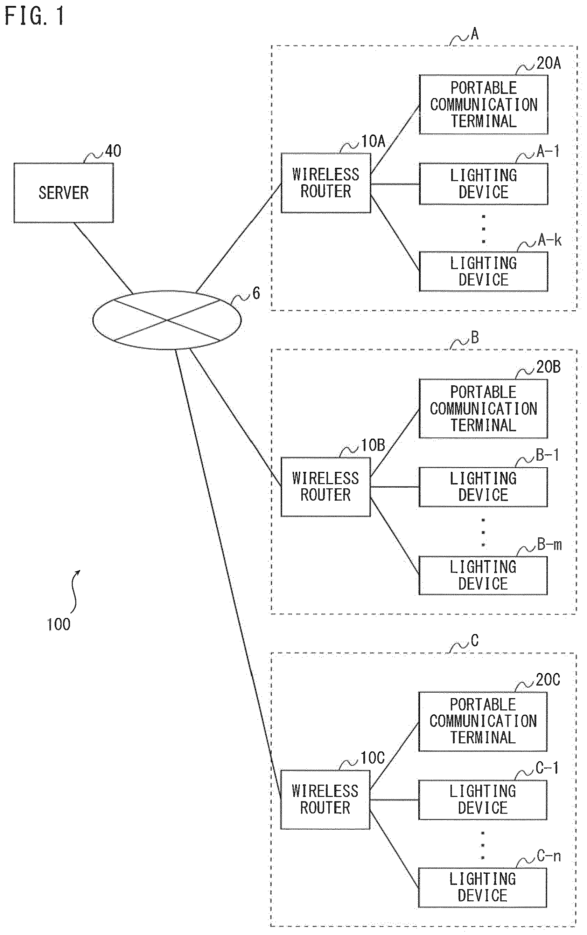

FIG. 1 is a functional block diagram showing the configuration of a lighting control system 100 according to an embodiment. Referring to FIG. 1, the lighting control system 100 includes a plurality of lighting devices, wireless routers 10A to 10C, portable communication terminals 20A to 20C, the Internet 6, and a server 40.

Stores A to C are stores selling articles of clothing. The store A also serves as a showroom located in the headquarters of a company running the stores B and C. The stores B and C are stores in a shopping mall or on a road.

Each of the stores A to C has a local-area network (LAN) built therein. The LAN in the store A includes the wireless router 10A, portable communication terminal 20A and lighting devices A-1 to A-k. k is a natural number not smaller than 1.

In the store A, the wireless router 10A provides a relay between the Internet 6 and the LAN in the store A. The wireless router 10A wirelessly communicates with the portable communication terminal 20A and lighting devices A-1 to A-k.

The lighting devices A-1 to A-k are installed in the store A. The lighting devices A-1 to A-k illuminate exhibits placed in an exhibition space of the store A. The exhibits may be, for example, mannequins wearing articles of clothing, articles of clothing or accessories exhibited on exhibition shelves.

The portable communication terminal 20A allows a staff member at the store A to select one of the lighting devices A-1 to A-k. The portable communication terminal 20A captures an image of an exhibit illuminated by the selected lighting device and displays the captured image, and receives designation of a desired position of the exhibit in the displayed captured image. The portable communication terminal 20A acquires a color codeword associated with the color in the captured image for the designated desired position. The portable communication terminal 20A transmits the acquired color codeword to the server 40 and requests the server 40 to decide on the lighting conditions for the selected lighting device.

When the server 40 is requested to decide on the lighting conditions from the portable communication terminal 20A, it determines the lighting conditions of the selected lighting device based on the color codeword transmitted from the portable communication terminal 20A. The server 40 transmits, to the selected lighting device, lighting control data containing the determined lighting conditions to cause the selected lighting device to illuminate the exhibit in the store A based on the determined lighting conditions.

The LAN in the store B includes the wireless router 10B, portable communication terminal 20B and lighting devices B-1 to B-m. The LAN in the store C includes the wireless router 10C, portable communication terminal 20C and lighting devices C-1 to C-n. m and n are natural numbers not smaller than 1.

The portable communication terminals 20B and 20C are used in the stores B and C in the same manner as the portable communication terminal 20A. The wireless routers 10B and 10C are used in the stores B and C in the same manner as the wireless router 10A. The lighting devices B-1 to B-m and C-1 to C-n are used in the stores B and C in the same manner as the lighting devices A-1 to A-k.

### {1.2 Configuration of Portable Communication Terminal 20A}

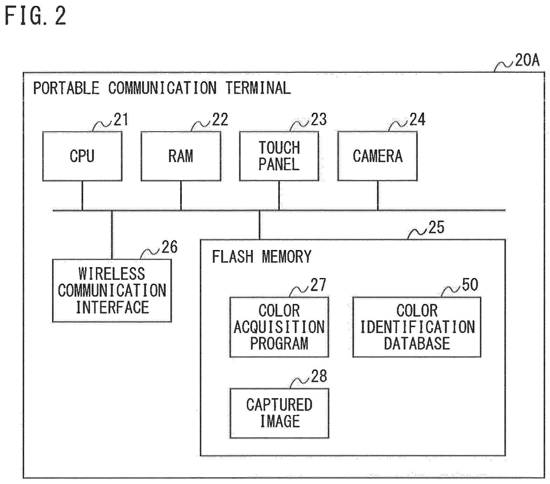

FIG. 2 is a functional block diagram showing the configuration of the portable communication terminal 20A. The configurations of the portable communication terminals 20B and 20C are the same as the configuration of the portable communication terminal 20A, and thus will not be described. Referring to FIG. 2, the portable communication terminal 20A includes a central processing unit (CPU) 21, random-access memory (RAM) 22, a touch panel 23, a camera 24, flash memory 25, and a wireless communication interface 26.

The CPU 21 loads various programs stored in the flash memory 25 into the RAM 22, and executes the loaded programs to control the portable communication terminal 20A. The RAM 22 is the main memory of the portable communication terminal 20A.

The touch panel 23 displays, for example, results from execution of the programs by the CPU 21. The touch panel 23 outputs the position touched by the user as operation information. The camera 24 photographs an object in response to an operation by the staff member at the store A.

The flash memory 25 is non-volatile semiconductor memory and contains a color acquisition program 27, a captured image 28 and a color identification database 50. The color acquisition program 27 is a program for causing the portable communication terminal 20A to receive designation of a desired position of an exhibit in the captured image 28, and to acquire the color in the captured image 28 for the designated desired position. The captured image 28 is generated by the camera 24 as it photographs an exhibit. The color identification database 50 stores a plurality of color codewords and a plurality of RGB (red, green and blue) value sets associated with the names of a plurality of colors.

The wireless communication interface 26 complies with IEEE 802.11, for example, and communicates with the server 40 and lighting devices A-1 to A-k via the wireless router 10A.

### {1.3 Configuration of Server 40}

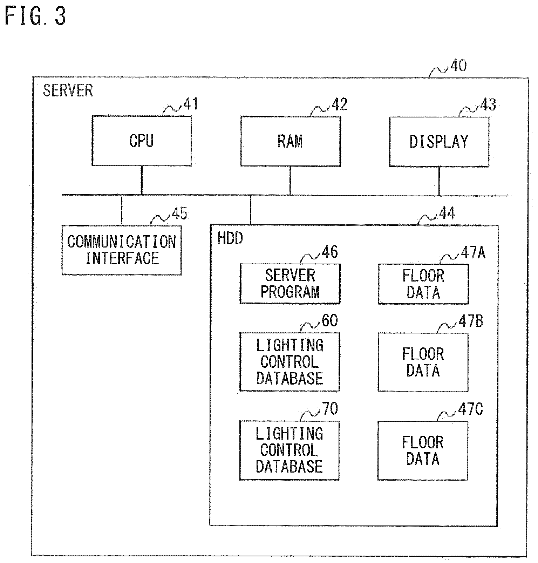

FIG. 3 is a functional block diagram showing the configuration of the server 40. Referring to FIG. 3, the server 40 includes a CPU 41, RAM 42, a display 43, a hard disk drive (HDD) 44 and a communication interface 45.

The CPU 41 loads various programs stored on the HDD 44 into the RAM 42, and executes the loaded programs to control the server 40. The RAM 42 is the main memory of the server 40. The display 43 displays results from execution of the programs by the CPU 41.

The HDD 44 stores a server program 46, a lighting control database 60, a lighting device database 70, and floor data sets 47A to 47C. The server program 46 is a program for determining the lighting conditions of the lighting devices A-1 to A-k, B-1 to B-m, and C-1 to C-n. When determining the lighting conditions, the server refers to the lighting control database 60. The floor data sets 47A to 47C represent the floor plans of the stores A to C. The lighting device database 70 stores information about the lighting devices, such as the stores in which the lighting devices are installed or identification information of the lighting devices (IP addresses). The floor data sets 47A to 47C, lighting control database 60 and lighting device database 70 will be described in detail further below.

The communication interface 45 communicates with the portable communication terminals 20A to 20C deployed in the stores A to C and the lighting devices A-1 to A-k, B-1 to B-m and C-1 to C-n installed in the stores via the Internet 6.

### {1.4 Configuration of Lighting Device A-1}

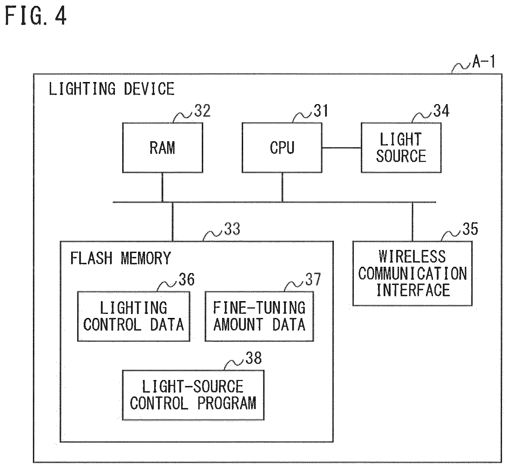

FIG. 4 is a functional block diagram showing the configuration of the lighting device A-1. The configuration of the each of the lighting devices other than the lighting device A-1 shown in FIG. 1 is the same as the configuration of the lighting device A-1, and thus their description will not be given. Referring to FIG. 4, the lighting device A-1 includes a CPU 31, RAM 32, flash memory 33, a light source 34, and a wireless communication interface 35.

The CPU 31 loads a light-source control program 38 stored in the flash memory 33 into the RAM 32, and executes the loaded programs to control the light source 34. The RAM 32 is the main memory of the lighting device A-1. The flash memory 33 stores lighting control data 36, fine-tuning amount data 37, and the light-source control program 38. The lighting control data 36 is data transmitted from the server 40 and storing lighting conditions of the lighting device A-1. The fine-tuning amount data 37 is data transmitted from the portable communication terminal 20A and storing amounts of fine-tuning for the lighting conditions of the lighting device A-1. The light-source control program 38 is a program for controlling the light source 34 based on the lighting control data 36 or fine-tuning amount data 37.

Although not shown, the light source 34 includes a white LED, a red LED, a green LED and a blue LED. The brightness of lighting is changed by the white LED. The red, green and blue LEDs are used to express the color of lighting. The CPU 31 executes the light-source control program 38 to control the output of the LEDs such that the light source 34 emits light under the lighting conditions based on the lighting control data 36 or fine-tuning amount data 37.

The wireless communication interface 35 complies with IEEE 802.11, for example, and communicates with the server 40 and portable communication terminal 20A via the wireless router 10A.

### {2. Operation of Lighting Control System 100}

The operation of the lighting control system 100 will now be described taking an example where the lighting device A1 in the store A is controlled. The exhibit illuminated by the lighting device A-1 is a mannequin wearing a top and a bottom.

### {2.1 Outline of Operation}

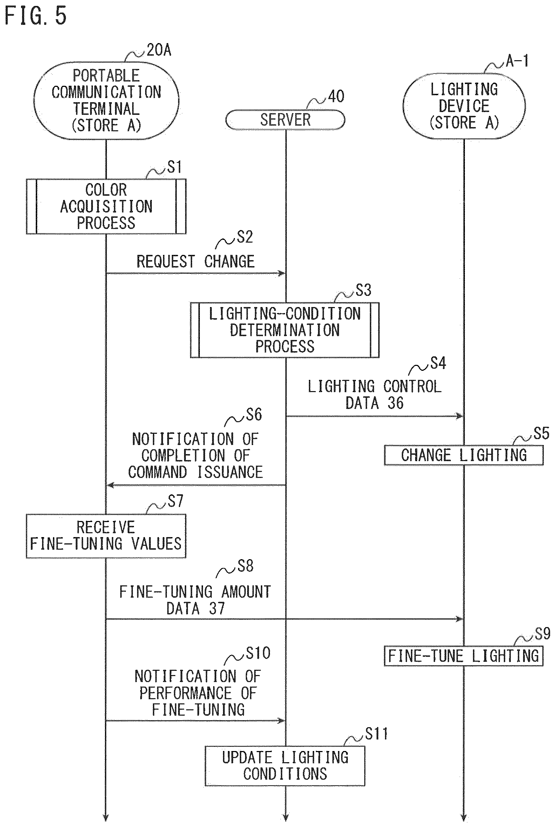

FIG. 5 is a sequence diagram illustrating the operation of the lighting control system 100 performed when the lighting conditions of the lighting device A-1 are to be controlled.

Referring to FIG. 5, the portable communication terminal 20A starts the color acquisition program 27 and executes a color acquisition process (step S1). In the color acquisition process (step S1), the portable communication terminal 20A selects the lighting device A-1 in response to an operation by a staff member at the store A, and photographs the mannequin illuminated by the selected lighting device A-1 to generates a captured image 28. The portable communication terminal 20A acquires a color codeword of a main color and a color codeword of a subordinate color of the mannequin based on a position in the captured image 28 designated by the staff member at the store A. The main color and subordinate color will be described in detail further below.

The portable communication terminal 20A transmits to the server 40 a change request that requests changes in the lighting conditions of the lighting device A-1 selected in the color acquisition process (step S1) (step S2). According to the present embodiment, the change request includes the color codeword of the main color and the color codeword of the subordinate color acquired at step S1, and data identifying the selected lighting device A-1.

When the server 40 receives the change request, it performs a lighting-condition determination process (step S3). More specifically, the server 40 refers to the lighting control database 60 to determine the lighting condition associated with the color codeword of the main color contained in the received change request. The server 40 refers to the lighting control database 60 to determine the adjustment condition associated with the color codeword of the subordinate color contained in the change request. The server 40 uses the adjustment condition that has been determined to adjust the lighting condition that has been determined.

The server 40 transmits the lighting control data 36 storing the adjusted lighting condition to the lighting device A-1 (step S4). According to the present embodiment, a lighting condition is a lighting color (i.e. color of light emitted by the lighting device), and is defined by an RGB value set.

When the lighting device A-1 receives the lighting condition data 36, it controls the output of the LEDs of the light source 34 based on the lighting condition (i.e. RGB value set) stored in the received lighting control data 36 (step S5). As a result, the mannequin is illuminated under the lighting condition determined based on the color codewords of the main and subordinate colors of the mannequin. The server 40 notifies the portable communication terminal 20A of completion of command issuance, indicating that the lighting device A-1 has been commanded to change its lighting condition (step S6).

Further, the staff member at the store A can fine-tune the lighting color of the lighting device A-1 (steps S7 to S9). The portable communication terminal 20A receives input of a fine-tuning value for the lighting color of the lighting device A-1 (step S7), and generates fine-tuning amount data 37 based on the received fine-tuning value. The portable communication terminal 20A transmits the generated fine-tuning amount data 37 to the lighting device A-1 (step S8). The lighting device A-1 fine-tunes the lighting color based on the received fine-tuning amount data 37 (step S9).

After step S9, the portable communication terminal 20A transmits a notification of performance of fine-tuning to the server 40 to notify the server that the lighting condition of the lighting device A-1 has been fine-tuned (step S10). The notification of performance of fine-tuning contains the fine-tuning amount data 37. Based on the fine-tuning amount data 37 contained in the received notification of performance of fine-tuning, the server 40 updates the lighting conditions of the lighting device A-1 stored in the lighting device database 70 (step S11).

Although not shown in FIG. 5, after step S11, the lighting control system 100 changes at once the lighting conditions of those of the lighting devices A-1 to A-k, B-1 to B-m and C-1 to C-n which are registered in advance as subject to an all-at-once change. This process will be described further below.

### {2.2 Color Acquisition Process (Step S1)}

### {2.2.1 Selection of Lighting Device}

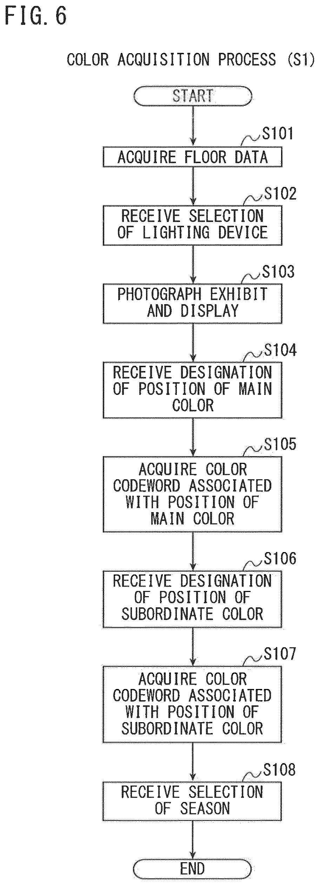

FIG. 6 is the flow chart of the color acquisition process (step 1) shown in FIG. 5. Referring to FTG. 6, the portable communication terminal 20A acquires, from the server 40, the floor data 47, which represents the floor plan of the store A (step S101). FIG. 5 does not show the process of step S101. For example, the portable communication terminal 20A may transmit data identifying the store A (e.g. the name of the store A) to the server 40 to request the server to transmit the floor data 47A.

When the server 40 is requested to transmit the floor data 47A, it reads, from the lighting device database 70, the main IDs of the lighting devices A-1 to A-k installed in the store A. The server 40 transmits, to the portable transmission terminal 20A, the floor data 47A together with the main IDs of the lighting devices A1 to A-k that have been read. The main IDs of the lighting devices A-1 to A-k are used when a change request (step S2) is transmitted.

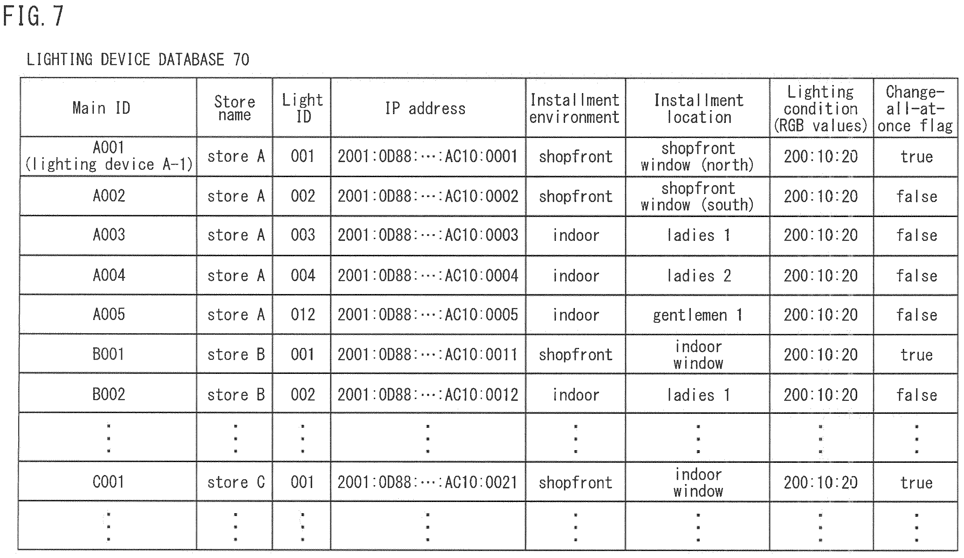

FIG. 7 shows an example of the lighting device database 70 shown in FIG. 3. Referring to FIG. 7, the lighting device database 70 stores data about the lighting devices installed in the stores A to C.

In the lighting device database 70, the main ID is the primary key in the lighting device database 70, and is an identification number unique to each of the lighting devices controlled by the lighting control system 100. The store name is the name of the store in which a lighting device is installed. The light ID is the identification number of a lighting device set by the individual store. Light IDs are assigned to the lighting devices in a store such that none of them repeats in this store. Thus, one and the same light ID may be assigned to a plurality of lighting devices.

The IP (internet protocol) address is an IP address assigned to each lighting device. According to the present embodiment, the IP address complies with IPv6. In FIG. 7, part of an IP address assigned to each lighting device is not displayed.

The installment environment is the environment in which an exhibit illuminated by a lighting device is placed. "Shopfront" means that the exhibit is placed in a show window, for example, that faces a road. "Indoor" means that the exhibit is placed in a department in the store or in a show window inside a shopping mall. The installment location is the specific location of each lighting device in a store. For example, "shopfront window" means a show window facing a road. "Ladies 1" and "ladies 2" mean that the lighting device is installed in a ladies' wear department in the store. "Gentlemen 1" means that the lighting device is installed in a gentlemen's wear department in the store.

The lighting condition is the current lighting condition of each lighting device, and is a lighting color (i.e. RGB value set) set for the lighting device. The change-all-at-once flag indicates whether a device is subject to an all-at-once change in the lighting condition. The change-all-at-once flag "true" indicates that the device is subject to an all-at-once change, and "false" means that the device is not subject to an all-at-once change.

Returning to FIG. 6, the portable communication terminal 20A displays the floor data 47A acquired from the server 40 on the touch panel 23, and receives selection of at least one of the lighting devices A-1 to A-k installed in the store A (step S102).

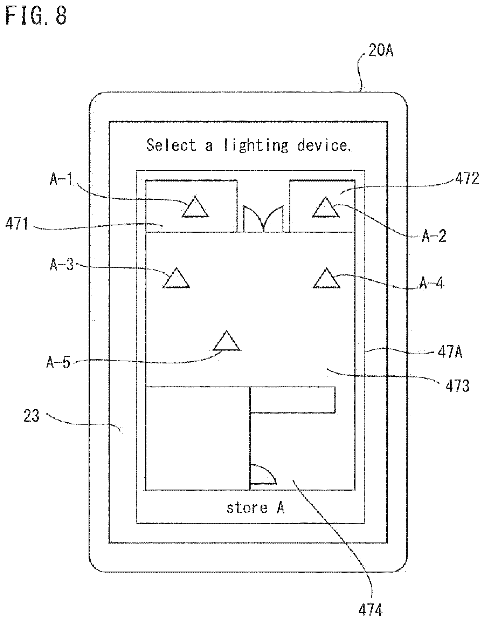

FIG. 8 shows an example of a device selection screen displayed on the touch panel 23 while step S102 is being performed. Referring to FIG. 8, the device selection screen includes the floor data 47A. Show windows 471 and 472, an area for departments 473, and a backyard 474 are depicted in the floor data 47A. Further, in the floor data 47A, a triangle indicates the position of one of the lighting devices A-1 to A-5. That is, according to the present embodiment, k=5, and five lighting devices are installed in the store A for illuminating exhibits. Further, the floor data 47A has a two-dimensional coordinate system, where the positions of the lighting devices A-1 to A-5 are identified by two-dimensional coordinates.

On the device selection screen displayed on the touch panel 23, the staff member at the store A taps on the illumination device A-1 installed in the show window 471. The portable communication terminal 20A detects the position on the touch panel 23 that has been tapped on, and determines that the position detected corresponds to the lighting device A-1. Thus, the portable communication terminal 20A receives the selection of the lighting device A-1.

### {2.2.2 Designation of Main Color}

Referring to FIG. 6, the portable communication terminal 20A photographs a mannequin inside the show window 471 illuminated by the lighting device A-1 to display the captured image 28 of the mannequin on the touch panel 23 (step S103).

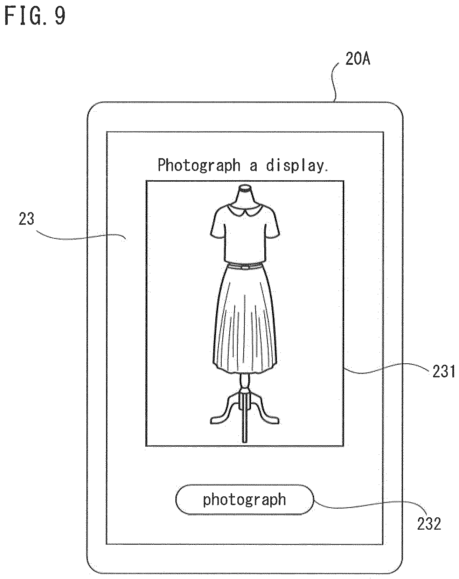

FIG. 9 shows an example of a captured image displayed on the touch panel 23 while step S103 is being performed. Referring to FIG. 9, the portable communication terminal 20A displays a video caught by the camera 24 on a finder area 231 of the capture screen, and prompts the staff member to capture an image of the mannequin (i.e. display). When the photograph button 232 is tapped on, the camera 24 photographs the mannequin inside the show window 471, and generates a captured image 28 of the mannequin.

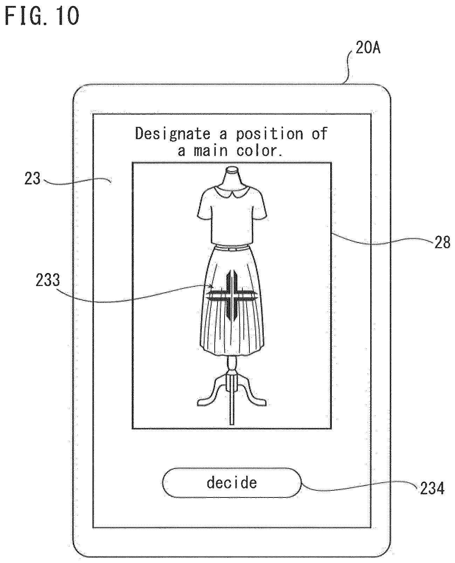

FIG. 10 shows an example of a main-color designation screen displayed on the touch panel 23 after the captured image 28 has been generated. Referring to FIG. 10, the main-color designation screen includes the captured image 28, a cursor 233 and a decision button 234. The cursor 233 is used to designate a position of the main color in the captured image 28. The default position of the cursor 233 is the center of the captured image 28. The decision button 234 is used by the staff member at the store A to decide on the position of the main color indicated by the center of the cursor 233.

Referring to FIG. 6, the portable communication terminal 20A receives designation of a position of the main color on the mannequin in the captured image 28 displayed on the main-color designation screen (step S104). Main color will now be described. A main color is the color that is selected as being the most noticeable color under the light from the lighting device A-1 among the colors of the clothing worn by the mannequin in the show window 471. That is, a main color is the color selected as being the color that should be emphasized most among the colors of the exhibit, and need not be the color that accounts for the largest area of the exhibit.

Referring to FIG. 10, when the staff member at the store A desires to designate the top (i.e. blouse) on the mannequin in the show window 471 as the main color, he/she taps on the top in the captured image 28. The portable communication terminal 20A moves the center of the cursor 233 to the position that has been tapped on. If the staff member at the store A determines that the color at the center of the cursor 233 after it has been moved is appropriate for designation as the main color, he/she taps on the decision button 234. The portable communication terminal 20A determines that the position of the center of the cursor 233 at the time point at which the decision button 234 was tapped on has been designated as the position of the main color. Thus, the reception of the designation of the position of the main color is completed.

Referring to FIG. 6, the portable communication terminal 20A acquires the color codeword associated with the position of the main color that has been designated (step S105). More specifically, the portable communication terminal 20A identifies the pixel in the captured image 28 that is associated with the position designated at step S104. The identified pixel will be hereinafter referred to as "main-color pixel". The portable communication terminal 20A acquires the RGB value set of the main-color pixel from the captured image 28. The portable communication terminal 20A refers to the color identification database 50 to acquire the color codeword associated with the RGB value set of the main-color pixel.

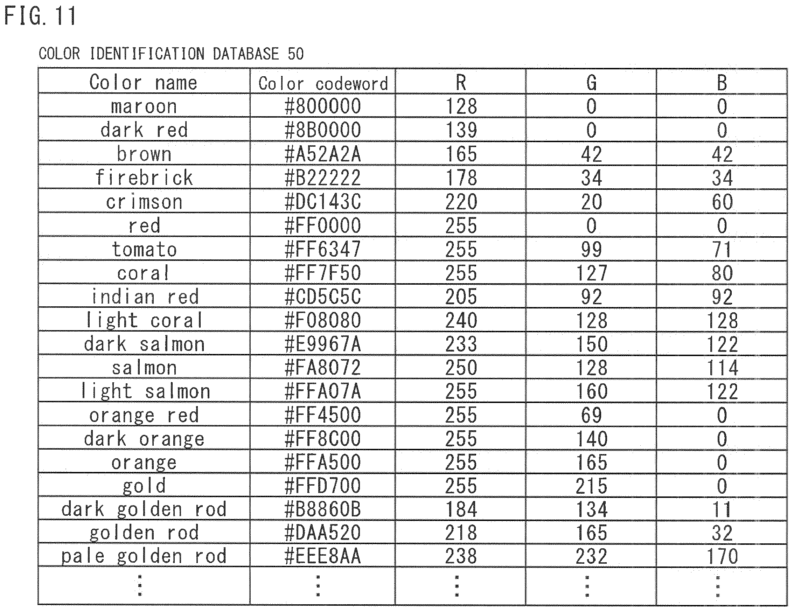

FIG. 11 shows an example of the color identification database 50 shown in FIG. 2. Referring to FIG. 11, the color identification database 50 stores the color codewords of a plurality of colors and the RGB value sets of the plurality of colors, where the codewords and RGB value sets are associated with the names of the plurality of colors. The portable communication terminal 20A identifies the RGB value set that is closest to the RGB value set of the main-color pixel among the RGB value sets stored in the color identification database 50. The portable communication terminal 20A acquires from the color identification database 50 the color codeword associated with the identified RGB value set as the color codeword of the main color, and acquires the name associated with the identified RGB value set as the name of the main color.

For example, if the RGB value set of the main-color pixel is "255, 126, 80", the portable communication terminal 20A identifies, in the color identification database 50, the RGB value set "255, 127, 80" as the RGB value set closest to the pixel value set of the main-color pixel. Based on the identified RGB value set "255, 127, 80", the portable communication terminal 20A acquires the color codeword "#FF7F50" for the main color and the name "coral" for the main color.

The portable communication terminal 20A may enable checking whether the color codeword of the acquired main color is appropriate. If the top is designed with a fine pattern, the portable communication terminal 20A may not acquire the color codeword of the main color that the staff member at the store A desires. In this case, the portable communication terminal 20A may suitably display the name of the main color that has been acquired on the main-color designation screen to ask the staff member whether he/she wishes to designate another position of the main color. The same applies to the step of acquiring the color codeword of the subordinate color (step S107), discussed further below.

### {2.2.3 Selection of Subordinate Color}

Referring to FIG. 6, the portable communication terminal 20A receives designation of a position of the subordinate color on the mannequin in the captured image 28 (step S106). A subordinate color is the color that is selected as being the second noticeable color to the main color among the colors of the clothing worn by the mannequin in the show window 471. That is, a subordinate color is the color selected as being the color that should be emphasized next to the main color among the colors of the exhibit. Similar to the main color, the subordinate color does not depend on the proportion of the area of the color in the exhibit.

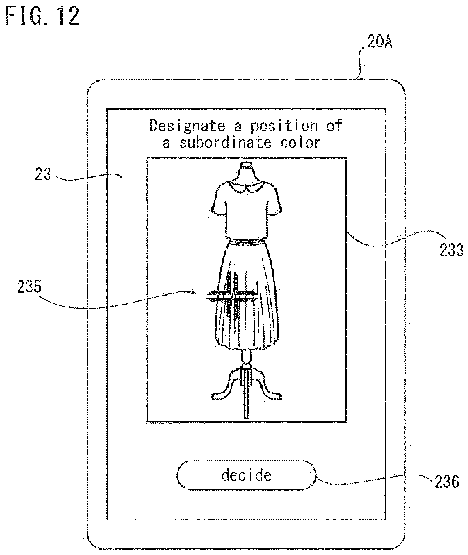

FIG. 12 shows an example of a subordinate-color designation screen displayed on the touch panel 23 while step S106 is being performed. Referring to FIG. 21, the subordinate-color designation screen includes the captured image 28, a cursor 235, and a decision button 236. When the staff member at the store A desires to designate the color of the bottom worn by the mannequin in the show window 471 as the subordinate color, he/she taps on the bottom in the captured image 28. The portable communication terminal 20A moves the position of the center of the cursor 235 to the position that has been tapped on. When the staff member at the store A determines that the color of the center of the cursor 235 is appropriate for designation as the subordinate color, he/she taps on the decision button 236. If the decision button 236 has been tapped on, the portable communication terminal 20A determines that the position of the center of the cursor 235 at the time moment at which tapping occurred has been designated as the position of the subordinate color.

The portable communication terminal 20A acquires the color codeword associated with the position of the subordinate color that has been designated (step S107). The procedure for acquiring the color codeword associated with the position of the subordinate color is analogous to that of step S105, and thus step S107 will not be described in detail.

### {2.2.4 Selection of Season}

Referring to FIG. 6, the portable communication terminal 20A receives selection of a season (step S108). A season is selected to make the lighting condition suitable for the seasonal feel of the exhibit. The seasonal feel of the exhibit may be different from the actual season. For example, in a store selling clothing, an article for autumn wear may put on the mannequin even when the actual season is summer. In this case, illuminating the mannequin with light of a color suitable for the article for autumn wear worn by the mannequin is preferable to illuminating the mannequin with light of a color suitable for the actual season (i.e. summer). In view of this, the staff member at the store A selects a season.

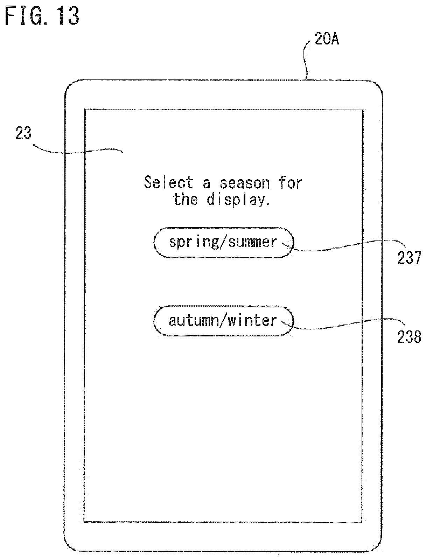

FIG. 13 shows an example of a season selection screen displayed on the touch panel 23 while step S108 is being performed. Referring to FIG. 13, the season selection screen includes selection buttons 237 and 238. The selection button 237 is used to select the season "spring/summer", and the selection button 238 is used to select the season "autumn/winter". For example, if the mannequin in the show window 471 wears an article of clothing for autumn wear, the staff member at the store A taps on the selection button 238. In this case, the portable communication terminal 20A creates season data storing the season "autumn/winter". The season data is used when a change request is transmitted (step S2).

### {2.3 Transmission of Change Request (step S2)}

Referring to FIG. 5, after completion of the color acquisition process (step S1), the portable communication terminal 20A creates a change request and transmits it (step S2). The change request includes the main ID of the lighting device A-1 selected at step S102, the color codeword of the main color acquired at step S105, the color codeword of the subordinate color acquired at step S107, and the season data associated with the season selected at step S108. After the portable transmission terminal 20A has transmitted the change request, it waits until it receives from the server 40 a notification of completion of command issuance indicating that the server 40 has commanded the lighting device A-1 to change the lighting condition (step S6).

### {2.4 Lighting-Condition Determination Process (Step S3)}

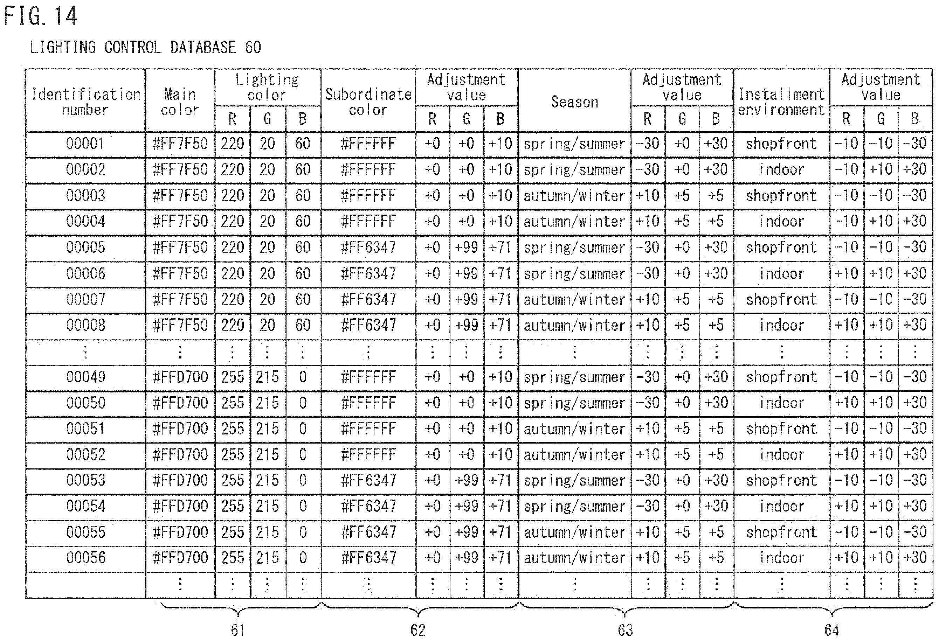

When the server 40 is to perform the lighting-condition determination process (step S3), it refers to the lighting control database 60. FIG. 14 shows an example of the lighting control database 60 shown in FIG. 3. Referring to FIG. 14, the lighting control database 60 includes a lighting condition database 61 and adjustment condition databases 62 to 64. The identification number is a number for uniquely identifying a record in the lighting control database 60. The databases included in the lighting control database 60 will be described in detail further below.

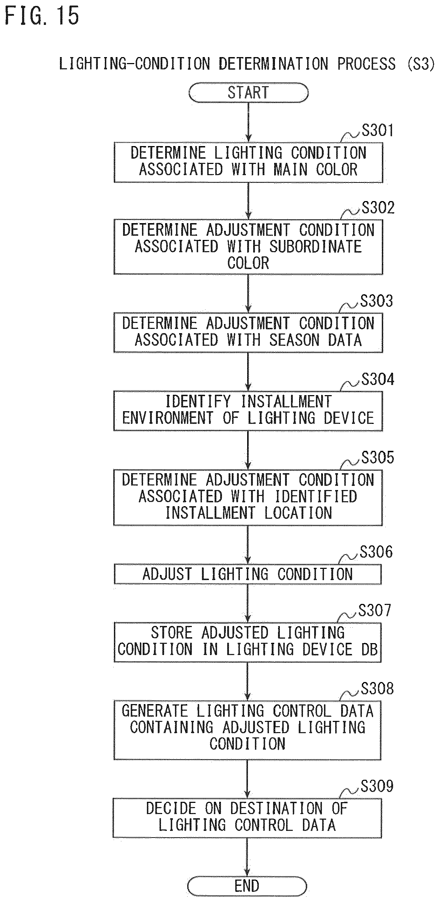

FIG. 15 is the flow chart of the lighting-condition determination process (step S3) illustrated in FIG. 5. When the server 40 receives a change request from the portable communication terminal 20A, it initiates the process illustrated in FIG. 15. The lighting-condition determination process (step S3) will be described in detail taking an example where the received change request contains the main ID of the lighting device A-1, the color codeword "#FF7F50" for the main color, the color codeword "#FFFFFF" for the subordinate color, and the season data storing the season "autumn/winter".

### {2.4.1 Determination of Lighting Condition}

Referring to FIGS. 14 and 15, the server 40 refers to the lighting condition database 61 to determine the lighting condition associated with the color codeword of the main color contained in the received change request (step S301). The lighting condition database 61 stores a plurality of lighting conditions associated with a plurality of color codewords. A lighting condition stored in the lighting condition database 61 is the RGB value set of a lighting color.

In the lighting condition database 61, a plurality of records are associated with the main color "#FF7F50". This is because the lighting condition database 61 and the adjustment condition databases 62 to 64 are managed as a single database.

The server 40 acquires the color codeword "#FF7F50" for the main color from the received change request. The server 40 searches the lighting control database 50 using the acquired color codeword "#FF7F50" for the main color, and acquires the RGB value set "220, 20, 60". The server 40 decides on the acquired RGB value set "220, 20, 60" as the lighting condition of the lighting device A-1.

### {2.4.2 Determination of Adjustment Condition Based on Subordinate Color}

The server 40 refers to the adjustment condition database 62 to determine the adjustment condition associated with the color codeword of the subordinate color contained in the received change request (step S302). The adjustment condition database 62 stores a plurality of adjustment conditions associated with a plurality of colors. The server 40 acquires, from the received change request, the color codeword "#FFFFFF" for the subordinate color. The server 40 searches the adjustment condition database 62 using the color codeword "#FF7F50" for the main color and the color codeword "#FFFFFF" for the subordinate color, and acquires the adjustment value set "+0, +0, +10". The server 40 decides on the acquired adjustment value set "+0, +0, +10" as the adjustment condition associated with the color codeword of the subordinate color.

The reason why an adjustment condition associated with the color codeword of a subordinate color must be determined will be described. For example, if the lighting device A-1 illuminates the mannequin with a lighting color (RGB values) determined at step S302, the portions of the mannequin that are in the main color is emphasized, but the portions of the mannequin that are in the subordinate color may not be noticeable. In view of this, the server 40 uses an adjustment condition associated with the color codeword of the subordinate color to adjust the lighting condition, thereby allowing both those portions of the mannequin are in the main color and those in the subordinate color to appear to be emphasized.

### {2.4.3 Determination of Adjustment Condition Based on Season Data}

The server 40 refers to the adjustment condition database 63 to determine the adjustment condition associated with the season data contained in the transmitted change request (step S303).

The adjustment condition database 63 stores a plurality of adjustment conditions associated with a plurality of seasons. The server 40 acquires, from the received change request, the season data storing the season "autumn/winter". The server 40 searches the adjustment condition database 62 using the acquired season data, the color codeword "#FF7F50" for the main color, and the color codeword "#FFFFFF" for the subordinate color. As a result of this search, the server 40 acquires the adjustment value set "+10, +5, +5" from the adjustment condition database 63, and decides on the acquired adjustment value set "+10, +5, +5" as the adjustment condition associated with the season "autumn/winter". As discussed below, the server 40 adjusts the lighting condition using the adjustment condition associated with the season stored in the season data. This enables illuminating the exhibit in a manner suitable for the seasonal feel of the exhibit.

### {2.4.4 Determination of Adjustment Condition Associated with Installment Environment}

The server 40 identifies the installment environment of the lighting device A-1 based on the main ID of the lighting device A-1 contained in the change request (step S304). More specifically, the server 40 searches the lighting device database 70 for the installment environment of the lighting device A-1 using the main ID of the lighting device A-1 contained in the received change request. As a result, the server 40 acquires the installment environment "shopfront" for the lighting device A-1.

The server 40 refers to the adjustment condition database 64 to determine the adjustment condition associated with the installment environment of the lighting device A-1 acquired at step S304 (step S305). Referring to FIG. 15, the adjustment condition database 64 stores a plurality of adjustment values associated with a plurality of installment environments. The server 40 searches the adjustment condition database 64 using the installment environment "shopfront" acquired at step S304, the color codeword "#FF7F50" for the main color, the color codeword "#FFFFFF" for the subordinate color, and the season "autumn/winter" stored in the season data. As a result of this search, the server 40 acquires the adjustment value set "-10, -10, -30" from the adjustment condition database 64, and decides on the acquired adjustment value set "-10, -10, -30" as the adjustment condition associated with the installment environment "shopfront".

The reason why the adjustment condition associated with the installment environment must be determined will be described. An exhibit is subject to various kinds of light, other than the light from the lighting device. For example, the show window 471 faces a road. In this case, the mannequin in the show window 471 is subject to natural light, in addition to the light from the lighting device A-1. Even if the lighting device A-1 illuminates the mannequin according to the lighting condition determined at step S302, the portions of the mannequin that are in the main color may be affected by natural light such that they are not emphasized.

Furthermore, assuming that the lighting device A-1 illuminates an exhibit located indoors, the exhibit is not subject to natural light, but is subject to the light from lighting devices other than the lighting device A-1. In this case, the effect of the light from the other lighting devices cannot be ignored. In view of this, the adjustment condition associated with the installment environment of the lighting device A-1 is used to adjust the lighting condition determined at step S302 to reduce the effect of the light from light sources other than the lighting device A-1.

### {2.4.5 Adjustment of Lighting Condition}

The server 40 adjusts the lighting condition determined at step S301 based on the adjustment condition determined at steps S302, S303 and S305 (step S306).

As discussed above, the server 40 acquires the RGB value set "220, 20, 60" for the lighting color as the lighting condition associated with the main color (step S301). The server 40 adjusts the acquired RGB value set "220, 20, 60" for the lighting color using the adjustment value set "+0, +0, +10" acquired at step S302, the adjustment value set "+10, +5, +5" acquired at step S303, and the adjustment value "-10, -10, -30" acquired at step S305. In these adjustment values, the character "+" means addition, while the character "-" means subtraction. As a result, the RGB value set "220, 20, 60" for the lighting color is adjusted by the above-listed three adjustment value sets to "+10, +5, +5".

The server 40 stores, in the lighting device database 70, the adjusted RGB value set for the lighting color as the lighting condition of the lighting device A-1 (step S307).

Steps S302 to S306 have been described taking an example where the lighting condition and the three adjustment conditions are separately determined. Alternatively, the lighting condition and three adjustment conditions together may be determined in a single step. In this case, the server 40 acquires the installment environment of the lighting device A-1 from the lighting device database 70. The server 40 searches the lighting control database 60 using the color codeword of the main color, the color codeword of the subordinate color, the season stored in the season data, and the installment environment of the lighting device A-1 as search conditions. As a result, the server 40 acquires, from the lighting control database 60, the lighting condition and three adjustment conditions together in a single step.

### {2.4.6 Generation and Transmission of Lighting Control Data 36}

The server 40 generates the lighting control data 36 containing the adjusted lighting condition (step S308). More specifically, the lighting control data 36 contains the RGB value set "180, 10, 70" of the adjusted lighting color.

Based on the main ID of the lighting device A-1 contained in the received change request, the server 40 sets of destination of the lighting control data 36 generated at step S307 to the lighting device A-1 (step S309). More specifically, the server 40 acquires the main ID of the lighting device A-1 from the received change request, and uses the acquired main ID to read the IP address of the lighting device A-1 from the lighting device database 70. The server 40 sets the destination of the lighting control data 36 to the IP address of the lighting device A-1 that has been read.

Referring to FIG. 5, the server 40 transmits the generated lighting control data 36 to the lighting device A-1 to command the lighting device A-1 to change its lighting condition (step S4).

### {2.5 Process of Changing Lighting (Step S5)}

Referring to FIG. 5, when the lighting device A-1 receives the lighting control data 36 from the server 40, it performs the process of changing lighting based on the lighting condition contained in the lighting control data 36 (step S5). More specifically, the lighting device A-1 stores in the flash memory 33 the received lighting control data 36 and acquires, from the stored lighting control data 36, the adjusted RGB value set "220, 15, 45" for the lighting color. The lighting device A-1 controls the output of each LED of the light source 34 to output light of the color with the acquired RGB value set "220, 15, 45". As a result, the mannequin in the show window 471 is illuminated by the lighting device A-1 with light of the color based on the adjusted RGB value set.

The mannequin in the show window 471 is illuminated under the lighting condition associated with the color codeword of the main color designated by the staff member at the store A such that the main color of the top worn by the mannequin is emphasized.

Further, the lighting condition has been adjusted by the adjustment condition associated with the color codeword of the subordinate color. As such, not only the main color of the top worn by the mannequin is emphasized, but also the subordinate color of the bottom. Since the lighting condition has been adjusted by the adjustment condition associated with the season selected by the staff member at the store A, the mannequin may be illuminated in a manner suitable for the seasonal feel of the clothing worn by the mannequin. Since the lighting condition has been adjusted with the adjustment condition associated with the installment environment of the lighting device A-1, the effect of light other than the light from the lighting device A-1 may be reduced.

After the server 40 transmits the lighting control data 36 to the lighting device A-1, it transmits a notification of completion of command issuance to the portable communication terminal 20A (step S6). When the portable communication terminal 20A receives the notification of completion of command issuance, it displays on the touch panel 23 a message indicating that the lighting control data 36 has been transmitted to the selected lighting device A-1. Thus, the staff member at the store A knows that the lighting condition of the lighting device A-1 has been changed.

### {2.6 Fine-tuning of Lighting Color}

After the lighting device A-1 has changed its lighting condition based on the lighting control data 36, the staff member at the store A may operate the portable communication terminal 20A to fine-tune the changed lighting condition of the lighting device A-1. The staff member at the store A may fine-tune not only the lighting color as a lighting condition, but also the brightness. For example, it is assumed that, due to the sun in the show window 471 and other factors, the lighting color that has been changed based on the lighting control data 36 may have to be fine-tuned. The staff member at the store A may fine-tune the lighting color of the lighting device A-1 to make the lighting in the show window 471 suitable to the actual situation in the store A.

Referring to FIG. 5, when the portable communication terminal 20A receives a notification of completion of command issuance (step S6), it is ready for an input of fine-tuning values for the lighting conditions of the lighting device A-1 (step S7). More specifically, the portable communication terminal 20A displays a confirmation screen to ask the staff member whether he/she wishes to fine-tune the lighting conditions of the lighting device A-1.

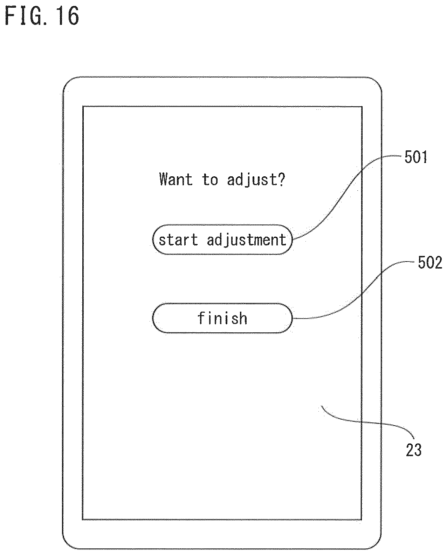

FIG. 16 shows a confirmation screen displayed on the touch panel 23. Referring to FIG. 16, when the start button 501 is tapped on, the portable communication terminal 20A displays a fine-tuning value input screen on the touch panel 23 to be ready for an input of fine-tuning values for the lighting conditions of the lighting device A-1.

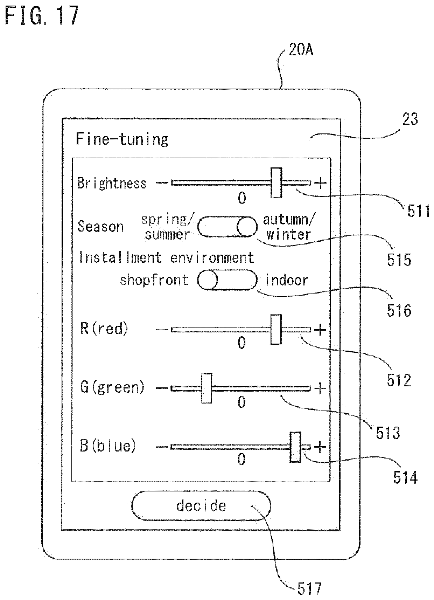

FIG. 17 shows an example of the fine-tuning value input screen displayed on the touch panel 23. Referring to FIG. 17, the fine-tuning value input screen includes sliders 511 to 514, slide-type checkboxes 515 and 516, and a decision button 517. The slide-type checkboxes will be hereinafter simply referred to as "checkboxes". The slider 511 is used to fine-tune the brightness of the lighting device A-1. More specifically, the slider 511 is used to fine-tune the output of the white LED of the light source 34. The sliders 512, 513 and 514 are used to fine-tune the output of the red, green and blue LEDs, respectively, in the light source 34.

The checkbox 515 is used to select a season. The initial value of the checkbox 515 is set based on the initial season value contained in the notification of completion of command issuance (step S6). The checkbox 516 is used to select an installment environment. The initial value of the checkbox 516 is set based on the initial installment environment value contained in the notification of completion of command issuance.

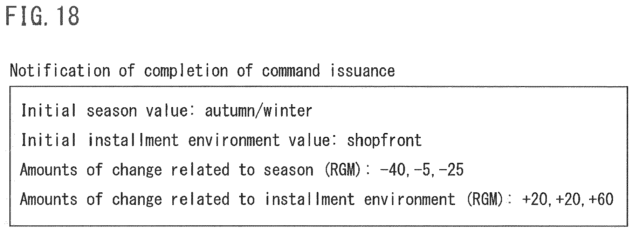

FIG. 18 shows an example of data contained in a notification of completion of command issuance. Referring to FIG. 18, the notification of completion of command issuance includes an initial season value, an initial installment environment value, amounts of change related to season, and amounts of change related to installment environment. The initial season value indicates the season referred to to determine the adjustment condition at step S304. The initial installment environment value indicates the installment environment of the lighting device A-1 identified at step S305. The values of fine-tuning related to season are a fine-tuning values for the lighting conditions used when the season is changed by means of the checkbox 515. The values of fine-tuning related to season are RGB values and are calculated based on the adjustment values for the season stored in the adjustment condition database 63. The values of fine-tuning related to installment environment are fine-tuning values for the lighting conditions used when the installment environment is changed by means of the checkbox 516. The values of fine-tuning related to installment environment are RGB values, and are calculated based on the fine-tuning values for the installment environment stored in the adjustment condition database 63.

The staff member at the store A operates the sliders 511 to 514 and checkboxes 515 and 516 to input fine-tuning values for the illuminations of the LEDs of the light source 34. After the staff member at the store A has completed input of the fine-tuning values, he/she taps on the decision button 517. When the decision button 517 is tapped on, the portable communication terminal 20A generates the amount of fine-tuning for the W (white) value and the amounts of fine-tuning for the RGB value set based on the fine-tuning values input by the staff member at the store A. The W value is used to fine-tune the illumination of the white LED of the light source 34. The amount of fine-tuning for the W value is generated based on the amount of movement of the knob on the slider 511.

The amounts of fine tuning for the RGB value set are generated based on the amounts of movement of the knobs on the sliders 512 to 514 and the indications of the checkboxes 515 and 516. For example, if the checkbox 515 is changed from "autumn/winter" to "spring/summer" and the knob of the slider 512 is moved in the positive direction, then, the portable communication terminal 20A adds the R value corresponding to the amount of movement of the knob on the slider 512 to the R value of the amounts of change related to season to generate the amount of fine-tuning for the lighting color. Further, if the season at the checkbox 515 is changed from "autumn/winter" to "spring/summer" and the installment environment at the checkbox 516 is changed from "shopfront" to "indoor", then, the portable communication terminal 20A sums the RGB value set of the amounts of change related to season and the RGB value set of the amounts of change related to installment environment to generate the amount of fine-tuning for the lighting color.

Referring to FIG. 5, the portable communication terminal 20A transmits the fine-tuning amount data 37 containing the amount of fine tuning for the W value and the amounts of fine-tuning for the lighting color that have been generated to the lighting device A-1 (step S8). When the lighting device A-1 receives the fine-tuning amount data 37, it increases or decreases the illumination of the white LED of the light source 34 based on the amount of fine-tuning for the W value contained in the fine-tuning amount data 37. This fine-tunes the brightness of the lighting by the lighting device A-1. Further, the lighting device A-1 increases or decreases the illuminations of the red, green and blue LEDs of the light source 34 based on the amounts of fine-tuning for the RGB value set contained in the fine-tuning amount data 37. This fine-tunes the lighting color of the lighting device A-1.

After the portable communication terminal 20A has transmitted the fine-tuning amount data 37 to the lighting device A-1, it transmits a notification of performance of fine-tuning to the server 40 (step S9). The notification of performance of fine-tuning is used to indicate that the lighting conditions of the lighting device A-1 have been fine-tuned, and contains the fine-tuning amount data 37.

Referring to FIG. 16, when the finish button 502 in the confirmation screen is tapped on, the portable communication terminal 20A finishes the fine-tuning value reception process (step S7). In this case, steps S8 and S9 are not performed. The portable communication terminal 20A does not transmit a notification of performance of fine-tuning and notifies the server 40 that the lighting conditions of the lighting device A-1 will not be fine-tuned.

When the server 40 receives the notification of performance of fine-tuning, it updates the lighting conditions of the lighting device A-1 stored in the lighting device database 70 based on the fine-tuning amount data 37 contained in the notification of performance of fine-tuning (step S11).

### {3.3 Changing Lighting Color of Several Lighting Devices at Once}

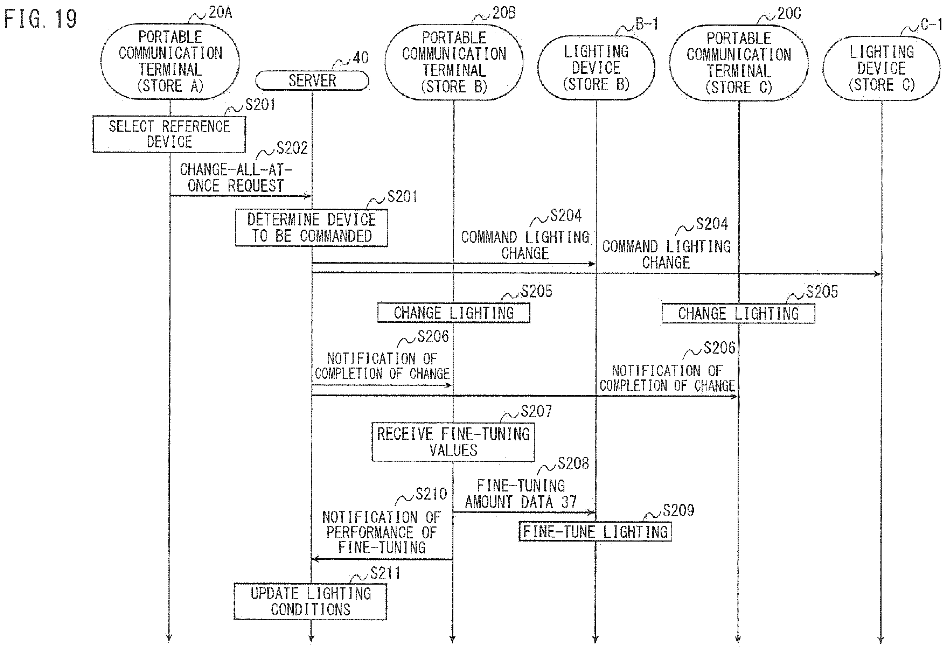

The staff member at the store A may operate the portable communication terminal 20A to change the lighting conditions of several particular lighting devices installed in the stores A to C at once. FIG. 19 is a sequence diagram showing the operation of the lighting control system 100 performed when the staff member at the store A operates the portable communication terminal 20A to command several devices to change their lighting color at once.

Referring to FIG. 19, in response to an operation by the staff member at the store A, the portable communication terminal 20A decides on a reference device (step S201). The reference device is a lighting device in which a lighting color desired by the staff member at the store A is set. The present embodiment will be described taking an example where the lighting device A-1 is selected as the reference device.

The portable communication terminal 20A displays the floor data 47A of the store A acquired from the server 40 at step S101 (see FIG. 6) to be ready for receiving selection of a reference device. The staff member at the store A selects the lighting device A-1 as the reference device. After the staff member at the store A selects the lighting device A-1, he/she may cause the portable communication terminal 20A to perform the color acquisition process (step S1; see FIG. 5) and change the lighting condition of the lighting device A-1. The staff member at the store A may fine-tune the lighting conditions of the lighting device A-1 by inputting fine-tuning values on the fine-tuning value input screen (see FIG. 17).

When the staff member at the store A commands all of the several lighting devices to change their color at once, the portable communication terminal 20A transmits a change-all-at-once request to the server 40 (step S202). The change-all-at-once request is used to command the server 40 to change the lighting color of the several lighting devices at once, and includes the main ID of the reference device selected at step S201.

When the server 40 receives the change-all-at-once request, it determines the lighting devices subject to a change-all-at-once command based on the lighting device database 70 (step S203). More specifically, referring to FIG. 7, the server 40 determines that those of the lighting devices registered in the lighting device database 70 that have the change-all-at-once flag "true" are subject to a change-all-at-once command. In the example shown in FIG. 7, the lighting devices B-1 and C-1 have the change-all-at-once flag "true", and it is thus determined that the lighting devices B-1 and C-1 are subject to a change-all-at-once command.

The server 40 transmits a change-lighting command to the lighting devices that have been determined to be subject to the change-all-at-once command at step S202 (step S204). More specifically, the server 40 acquires, from the received change-all-at-once request, the main ID "A001" of the lighting device A-1 selected as the reference device. The server 40 reads the lighting condition of the lighting device A-1 from the lighting device database 70 based on the acquired main ID and creates a change-all-at-once request containing the lighting condition of the lighting device A-1 that has been read. The server 40 sets the destination of the change-all-at-once request to the lighting devices B-1 and C-1 determined to be subject to a change-all-at-once command at step S203, and transmits a change-lighting request to these devices.

The lighting devices B-1 and C-1 receive the change-lighting request from the server 40. Each of the lighting devices B-1 and C-1 controls the output of its light source 34 based on the lighting condition contained in the received change-lighting request (step S204). The process of the step S204 is the same as the process of step S5 (see FIG. 5), and it will not be described in detail.

After the server 40 has transmitted the change-lighting request, it transmits a notification of completion of change to the portable communication terminals 20B and 20C (step S205). More specifically, the server 40 notifies the portable communication terminal 20A that the lighting of the lighting device B-1 has been changed, and notifies the portable communication terminal 20C that the lighting of the lighting device C-1 has been changed. Thus, a staff member at the store B knows that the lighting of the lighting device B-1 has been changed on a change-all-at-once basis. The same applies to a staff member at the store C.

The staff member at the store B may operate the portable communication terminal 20B to fine-tune the lighting conditions of the lighting device B-1. The portable communication terminal 20B receives an input of fine-tuning values (step S207) and transmits the fine-tuning amount data 37 to the lighting device B-1 (step S208). The lighting device B-1 fine-tunes the lighting conditions based on the received fine-tuning amount data 37 (step S209). After the portable communication terminal 20B has transmitted the fine-tune request to the lighting device B-1, it transmits a notification of performance of fine-tuning to the server 40 (step S210). The server 40 updates the lighting conditions of the lighting device B-1 stored in the lighting device database 70 based on the received notification of performance of fine-tuning (step S211). The process of steps S207 to S211 is the same as the process of steps S7 to S11 (see FIG. 5), and will not be described in detail.

Although not shown in FIG. 19, the staff member at store C may operate the portable communication terminal 20C to fine-tune the lighting conditions of the lighting device C-1 in the same manner as the staff member at the store B.

Thus, as the lighting condition of a plurality of lighting devices are changed at once, staff members at various stores need not operate terminals to designate main and subordinate colors for exhibits illuminated by lighting devices on a lighting device-to-lighting device basis. For example, if samples of the same exhibit are exhibited in the stores A to C, it is desirable to illuminate the exhibit samples with the same lighting color from the lighting devices to create a unified impression of the exhibit. In this case, the portable communication terminal 20A may issue a change-all-at-once command to easily unify the lighting condition of the lighting devices illuminating samples of the same exhibit at various stores.

### {Variations}

In the above-illustrated embodiment, the portable communication terminal 20A acquires the color codeword associated with a position of the main color in the captured image 28 in the color acquisition process (step S1; see FIG. 6) (step S105), but the invention is not limited to such an implementation. The server 40 may perform step S105. In such implementations, the portable communication terminal 20A transmits, to the server 40, the captured image 28 and coordinate data indicative of the position of the main color in the captured image 28 designated at step S104. The server 40 acquires the color codeword of the main-color pixel (i.e. pixel in the captured image 28 associated with the position of the main color) based on the color identification table 50 stored on the HDD 44. That is, the server 40 may refer to the lighting condition database 61 storing a plurality of lighting conditions associated with a plurality of colors to determine the lighting condition associated with the color of the captured image 28 for the position designated at step S104.

Similarly, the server 40, instead of the portable communication terminal 20, may perform step S107 (see FIG. 6) to acquire the color codeword associated with a position of the subordinate color in the captured image 28. That is, the server 40 may refer to the adjustment condition database 62 storing a plurality of adjustment conditions associated with a plurality of colors and determine the lighting condition associated with the color in the captured image 28 for the position designated at step S106.

The above-illustrated embodiment describes an implementation where the portable communication terminal 20A uses two selection buttons 237 and 238 on the season selection screen (see FIG. 13), but the invention is not limited to such an implementation. The portable communication terminal 20A may receive selection of one of four seasons, or receive selection of one of 12 months. That is, the portable communication terminal 20A may receive selection of a time at step S108 (see FIG. 6) and the server 40 may adjust the lighting condition depending on the time selected at step S108.

Starting from the above-illustrated embodiment, the portable communication terminal 20A may repeat the fine-tuning of the lighting conditions of the lighting device A-1 (steps S7 to S9; see FIG. 5). For example, after the portable communication terminal 20A has transmitted a notification of performance of fine-tuning (step S9), it displays the confirmation screen (see FIG. 16) on the touch panel 23 once again. If the start button 501 in the confirmation screen is tapped on, the portable communication terminal 20A displays the fine-tuning value input screen once again and repeats the relevant process described above. On the other hand, if the finish button 502 in the confirmation screen is tapped on, the portable communication terminal 20A transmits a notification of completion of fine-tuning containing no amounts of fine-tuning for the RGB value set (step S10).

The above-illustrated embodiment describes an implementation where the server 40 performs step S307 (see FIG. 14) to adjust the lighting condition associated with the color codeword of the main color, but the invention is not limited to such an implementation. The server 40 need not adjust the lighting condition. Alternatively, the server 40 may adjust the lighting condition using at least one of the adjustment condition associated with the color codeword of the subordinate color, the adjustment condition associated with the season, and the adjustment condition associated with the installment environment.

The above-illustrated embodiment describes an implementation where the exhibit is a mannequin wearing articles of clothing or accessories exhibited on an exhibition shelf, but the invention is not limited to such an implementation. The exhibit may be an object that is shown to the public. Further, the above-illustrated embodiment describes an implementation where the exhibition space is a show window in a store selling clothing or a space with an exhibition shelf positioned in a store, but the invention is not limited to such an implementation. The exhibition space may be a space for exhibiting an exhibit.

Although an embodiment of the present invention has been described, the above-illustrated embodiment is merely an example for carrying out the present invention. Thus, the present invention is not limited to the above-illustrated embodiment, and the above-illustrated embodiment may be modified as appropriate without departing from the spirit of the invention.

### EXPLANATION OF CHARACTERS

- 100: lighting control system
- 10A to 10C: wireless routers
- 20A to 20C: portable communication terminals
- 21, 31, 41: CPU
- 22, 32, 42: RAM
- 23: touch panel
- 24: camera
- 25, 33: flash memory
- 26, 35: wireless communication interface
- 36: lighting control data
- 37: fine-tuning amount data
- 27: color acquisition program
- 28: captured image
- 38: light-source control program
- 40: server
- 46: server program
- 47A to 48: floor data
- 50: color identification database
- 60: lighting control database
- 70: lighting device database

## Claims

1. A lighting control method for controlling a lighting device for illuminating an exhibit being exhibited in an exhibition space, comprising the steps of:
capturing an image of the exhibit and displaying the captured image of the exhibit;
receiving designation of a desired position on the exhibit in the displayed captured image;
referring to a lighting condition database storing a plurality of lighting conditions associated with a plurality of colors and determining a lighting condition associated with a first color in the captured image for the designated desired position; and
causing the lighting device to illuminate the exhibit based on the lighting condition that has been determined.

2. The lighting control method according to claim 1, further comprising the steps of:
receiving designation of a desired position different from the desired position;
referring to an adjustment condition database storing a plurality of adjustment conditions associated with a plurality of colors and determining an adjustment condition associated with a second color in the captured image for the designated different desired position; and
adjusting the lighting condition that has been determined based on the adjustment condition that has been determined.

3. The lighting control method according to claim 1, further comprising the step of, while illuminating the exhibit with light associated with the lighting condition that has been determined, using in the exhibition space a portable communication terminal capable of communicating with the lighting device to fine-tune the light from the lighting device.

4. The lighting control method according to claim 1, further comprising the step of selecting one of a plurality of lighting devices,
wherein the step of illuminating causes the selected lighting device to illuminate the exhibit.

5. The lighting control method according to claim 1, further comprising the steps of:
receiving selection of a time suitable for an impression of the exhibit;
referring to an adjustment condition database storing a plurality of adjustment conditions associated with a plurality of times and determining an adjustment condition associated with the selected time; and
adjusting the lighting condition that has been determined based on the adjustment condition that has been determined.

6. The lighting control method according to claim 1, further comprising the step of notifying a plurality of lighting devices installed in a plurality of stores of the lighting condition that has been determined.

7. A lighting system comprising:
a lighting device configured to illuminate an exhibit being exhibited in an exhibition space;
a portable communication terminal capable of communicating with the lighting device; and
a server capable of communicating with the lighting device and the portable communication terminal,
the portable communication terminal including:
a camera configured to capture an image of the exhibit;
a display configured to display the captured image of the exhibit captured by the camera; and
a position designation unit configured to receive designation of a desired position on the exhibit in the captured image being displayed,
the server including:
a lighting-condition determination unit configured to refer to a lighting condition database storing a plurality of lighting conditions associated with a plurality of colors and determine a lighting condition associated with a color in the captured image for the designated desired position; and
a communication unit configured to transmit, to the lighting device, the lighting condition determined by the lighting-condition determination unit,
the lighting device including:
a light source; and
a control unit configured to control the light source to emit light under the lighting condition transmitted by the communication unit.
